(19) Europäisches Patentamt / European Patent Office / Office européen des brevets

(11) **EP 4 738 538 A1**

(12) **EUROPEAN PATENT APPLICATION**
published in accordance with Art. 153(4) EPC

(43) Date of publication:
06.05.2026 Bulletin 2026/19

(21) Application number: 24829838.2

(22) Date of filing: 19.02.2024

(51) International Patent Classification (IPC):
*H01M 10/63* $^{(2014.01)}$    *H01M 10/613* $^{(2014.01)}$

(52) Cooperative Patent Classification (CPC):
Y02E 60/10

(86) International application number:
**PCT/CN2024/077562**

(87) International publication number:
**WO 2025/001179 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 30.06.2023 CN 202310798566

(71) Applicant: **Contemporary Amperex Technology Co., Limited**
**Ningde, Fujian 352100 (CN)**

(72) Inventors:
• WU, Kai
  Ningde, Fujian 352100 (CN)
• CHAN, Libing
  Ningde, Fujian 352100 (CN)

(74) Representative: **Gong, Jinping**
**CocreateIP**
**Neumarkter Straße 21**
**81673 München (DE)**

(54) **BATTERY TEMPERATURE CONTROL METHOD, APPARATUS AND SYSTEM, AND DEVICE AND STORAGE MEDIUM**

(57) This application relates to the field of batteries, and provides a battery temperature control method, apparatus, and system, a device, and a storage medium. The method includes: obtaining a first temperature of a first battery and a second temperature of a second battery in an electric device; determining a first temperature difference based on the first temperature and the second temperature; and under a condition that the first temperature difference is greater than a predetermined first temperature difference threshold, performing cooling processing on the first battery, where the first temperature is higher than the second temperature. Under a condition that the first temperature difference is greater than the first temperature difference threshold, the first battery corresponding to the first temperature is cooled. In this way, temperatures between batteries are close, improving overall performance of the batteries, and enhancing battery use experience.

Obtain a first temperature of a first battery and a second temperature of a second battery in an electric device — S301

Determine a first temperature difference based on the first temperature and the second temperature — S302

Under a condition that the first temperature difference is greater than a predetermined first temperature difference threshold, perform cooling processing on the first battery — S303

FIG. 3

## Description

This application claims priority to the Chinese Patent Application No. 202310798566.2, filed with the China National Intellectual Property Administration on June 30, 2023 and entitled "BATTERY TEMPERATURE CONTROL METHOD, APPARATUS, AND SYSTEM, DEVICE, AND STORAGE MEDIUM", which is incorporated herein by reference in its entirety.

## TECHNICAL FIELD

This application relates to the field of batteries, and in particular, to a battery temperature control method, apparatus, and system, a device, and a storage medium.

## BACKGROUND

With the development of battery energy storage technology, energy density of batteries has been significantly improved. However, this progress also brings potential challenges. For instance, during operation, factors such as environmental conditions or operation power may cause a battery temperature to rise and become relatively high, compromising safe and stable battery performance.

To reduce the hazards caused by excessively high battery temperature, temperature thresholds T0 and T1 may be preset. When the battery temperature reaches the temperature threshold T0, cooling is started. During the cooling process, if the temperature drops to the temperature threshold T1, cooling is stopped. In this way, the probability of excessively high battery temperature can be effectively reduced. However, when batteries are applied in scenarios such as heavy trucks and engineering machinery devices, one electric device may include multiple batteries, and there may be temperature differences between different batteries. This is not conducive to improving battery performance and affects battery usage experience.

## SUMMARY

In view of this, embodiments of this application provide a battery temperature control method, apparatus, and system, a device, and a storage medium to solve the problem in the prior art that one electric device may include multiple batteries and there may be temperature differences between different batteries, which is not conducive to improving battery performance and affects battery usage experience.

A first aspect of embodiments of this application provides a battery temperature control method, where the method includes: obtaining a first temperature of a first battery and a second temperature of a second battery in an electric device; determining a first temperature difference based on the first temperature and the second temperature; and under a condition that the first temperature difference is greater than a predetermined first temperature difference threshold, performing cooling processing on the first battery, where the first temperature is higher than the second temperature.

At least two batteries may be included in the electric device. The first battery and the second battery are any two of two or more batteries, that is, any two batteries can be selected as the first battery and the second battery in a combination for temperature difference comparison and cooling processing. To determine the first temperature difference, the first temperature is greater than the second temperature, and the first temperature difference with a positive value can be obtained by subtracting the second temperature from the first temperature. Under a condition that the first temperature difference is greater than the first temperature difference threshold, cooling the first battery corresponding to the first temperature. In this way, temperatures between batteries are close, improving overall performance of the batteries, and enhancing battery use experience.

With reference to the first aspect, in a first possible implementation of the first aspect, the first temperature includes an average of temperatures at two or more measurement points in the first battery, and the second temperature includes an average of temperatures at two or more measurement points in the second battery.

In a possible implementation, two or more temperature sensors are provided in the battery, and two or more temperatures are collected by the two or more temperature sensors. The two or more temperature sensors may be evenly provided in the battery. Determining the first temperature of the first battery and the second temperature of the second battery based on an average of the collected two or more measurement point temperatures can improve the accuracy of the battery temperature. A more accurate battery temperature can be obtained by using the two or more temperature sensors provided in the first battery or the second battery.

With reference to the first aspect, in a second possible implementation of the first aspect, the first temperature is an average of temperatures of two or more cells in the first battery, or a temperature of a specified cell in the first battery; and the second temperature is an average of temperatures of two or more cells in the second battery, or a temperature of a specified cell in the second battery.

Two or more cells are respectively provided in the first battery and the second battery. A temperature sensor may be provided at each cell to collect the temperature of each cell. An average is calculated based on the collected temperature of each cell to obtain the first temperature of the first battery and the second temperature of the second battery. This application is limited thereto. Temperatures of some cells in the battery may alternatively be collected, for example, temperatures of cells are collected at intervals of a predetermined cell quantity, or temperatures of cells in the battery may alternatively be collected at intervals of a predetermined distance. The first temperature and the second temperature are determined by calculating an average of multiple temperatures collected in one battery. In this way, the determined battery temperature is more accurate. Alternatively, the temperature of a specified cell in the first battery may be determined as the first temperature, and the temperature of a second cell in the second battery may be determined as the second temperature.

With reference to any one implementation of the first aspect to the second possible implementation of the first aspect, in a third possible implementation of the first aspect, the obtaining a first temperature of a first battery and a second temperature of a second battery in an electric device includes: obtaining temperatures of multiple batteries in the electric device; and determining a highest temperature and a lowest temperature of the multiple batteries, where the highest temperature is the first temperature of the first battery, and the lowest temperature is the second temperature of the second battery.

When two or more batteries are provided in a vehicle, in order to avoid multiple first temperature differences between the multiple batteries, cooling is performed on one battery multiple times, resulting in troublesome operation and low cooling efficiency. Temperatures of all batteries may be obtained separately, and the highest temperature and the lowest temperature among all batteries can be determined. The highest temperature is determined as the first temperature, and the lowest temperature is determined as the second temperature. The first temperature difference is determined based on the determined first temperature and second temperature, and the cooling processing is performed based on the determined first temperature difference, thereby enabling timely cooling processing on the battery with the highest temperature and improving cooling efficiency.

With reference to any one implementation of the first aspect to the second possible implementation of the first aspect, in a fourth possible implementation of the first aspect, the obtaining a first temperature of a first battery and a second temperature of a second battery in an electric device includes: obtaining temperatures of multiple batteries in the electric device; determining a lowest temperature of the multiple batteries as the second temperature, where a battery corresponding to the second temperature is the second battery; and using other batteries rather than the second battery as first batteries, and determining first temperatures of the first batteries.

To further improve the cooling efficiency of the batteries and enhance battery performance, the lowest temperature among temperatures of the multiple batteries can be determined, and the lowest temperature is determined as the second temperature. Temperatures of other batteries are compared with the second temperature, and a temperature of one battery is or temperatures of two or more batteries are determined as the first temperature based on the first temperature difference threshold, and cooling processing is performed on one battery or two or more batteries. By comparing the battery temperature with the lowest temperature to determine the battery that needs cooling, the cooling efficiency of the batteries can be improved, temperature differences of multiple batteries can be quickly reduced, and performance during battery use can be enhanced.

With reference to any one of the first aspect to the fourth possible implementation of the first aspect, in a fifth possible implementation of the first aspect, the method further includes: under a condition that a highest temperature of the multiple cells in the first battery is greater than a predetermined first temperature threshold, performing the cooling processing on the first battery; or under a condition that the first temperature of the first battery is greater than a predetermined second temperature threshold, performing the cooling processing on the first battery.

When the battery includes multiple temperature sensors, temperatures of multiple measurement points at different positions can be collected, or when temperatures corresponding to multiple cells are collected, a highest temperature among the temperatures of the multiple cells in one battery can be determined. When the highest temperature of the battery is determined, the highest temperature of the battery can be used as a condition to trigger cooling of the battery. That is, cooling processing on the first battery can be triggered in a case that any one of the following conditions is satisfied: the first temperature difference is greater than the first temperature difference threshold, or the highest temperature among two or more temperatures in the first battery is greater than the predetermined first temperature threshold, or the first temperature of the first battery is greater than the predetermined second temperature threshold. Since the cooling processing is triggered based on the highest temperature among the temperatures at different detection positions of the first battery, cooling can be triggered in a timely manner under a condition that a local temperature of the first battery rises. This is conducive to improving timeliness of cooling.

With reference to the fifth possible implementation of the first aspect, in a sixth possible implementation of the first aspect, under a condition that the highest temperature among two or more temperatures in the first battery is less than or equal to a predetermined third temperature threshold, the cooling processing on the first battery is stopped; or under a condition that the temperature of the first battery is less than or equal to a predetermined fourth temperature threshold, the cooling processing on the first battery is stopped, where the third temperature threshold is less than the first temperature threshold, the fourth temperature threshold is less than the second temperature threshold, and the third temperature threshold is less than the first temperature threshold.

When it is determined that the temperature of the first battery is relatively high and the cooling processing needs to be performed on the first battery, in order to reduce a frequency of cooling processing on the first battery, a third temperature threshold may be set so that the highest temperature of the multiple cells in the first battery is less than or equal to the third temperature threshold, so that the temperature of the first battery can drop to a relatively low temperature range, prolonging a time for the first temperature of the first battery to quickly rise and exceed the first temperature threshold, thereby increasing the duration that the battery maintains at low temperature and improving battery performance.

With reference to any one implementation of the first aspect to the sixth possible implementation of the first aspect, in a seventh possible implementation of the first aspect, performing cooling processing on the first battery includes: under a condition that the highest temperature among the temperatures of the multiple cells in the first battery is greater than a predetermined first temperature threshold, comparing the first temperature difference with a preset second temperature difference threshold; or under a condition that the temperature of the first battery is greater than the predetermined second temperature threshold, comparing the first temperature difference with the preset second temperature difference threshold, where the second temperature difference threshold is less than the first temperature difference threshold; and under a condition that the first temperature difference is less than the predetermined second temperature difference threshold, performing cooling processing on the first battery and the second battery.

To further improve the cooling efficiency of the batteries, under a condition that the highest temperature among the multiple temperatures in the first battery is greater than the predetermined first temperature threshold, the first temperature difference may be first compared with the second temperature difference threshold, where the second temperature difference threshold is less than the first temperature difference threshold. If the first temperature difference is less than the second temperature difference threshold, it indicates that the temperatures of the first battery and the second battery are relatively close. The cooling processing on the first battery and the second battery makes it less necessary to perform cooling processing on the second battery after cooling the first battery because the temperature difference between the cooled first battery and the second battery is greater than the first temperature difference threshold. This is conducive to improving the cooling efficiency of the batteries and enhancing battery performance.

With reference to the seventh possible implementation of the first aspect, in an eighth possible implementation of the first aspect, under a condition that the first temperature difference is less than the predetermined second temperature difference threshold, the performing cooling processing on the first battery and the second battery includes: under a condition that the second temperature of the second battery drops to less than or equal to the predetermined second temperature threshold, stopping performing cooling processing on the first battery and the second battery.

In general, during the cooling process, the temperature of the second battery is lower than the temperature of the first battery. When the temperature of the second battery drops to less than the second temperature threshold, the cooling processing on the first battery and the second battery is stopped. The second temperature threshold is less than the first temperature threshold. Since the second temperature difference between the first temperature and the second temperature is relatively small, after simultaneous cooling, both the first battery and the second battery drop to relatively low temperatures.

With reference to any one implementation of the first aspect to the second possible implementation of the first aspect and the fifth possible implementation of the first aspect to the eighth possible implementation of the first aspect, in a ninth possible implementation of the first aspect, the first battery is cooled by a first unit, the second battery is cooled by a second unit, and the first unit and the second unit communicate with a battery management system.

When cooling the first battery and the second battery, different units can be provided for each battery of a vehicle or another electric device for cooling. For example, the first battery is cooled by a first unit, and the second battery is cooled by a second unit. The first unit and the second unit communicate with the battery management system, and a cooling instruction is sent through the battery management system to control each unit for cooling. By setting multiple units for cooling control, high-power cooling needs of high-power engineering devices, including electric devices such as heavy trucks can be effectively satisfied.

With reference to any one implementation of the first aspect to the second possible implementation of the first aspect and the fifth possible implementation of the first aspect to the eighth possible implementation of the first aspect, in a tenth possible implementation of the first aspect, a unit is connected to a plurality of cooling channels through control valves, the cooling channels include a first cooling channel and a second cooling channel, and the control valves include a first control valve and a second control valve; and the first battery is cooled through the first cooling channel, the second battery is cooled through the second cooling channel, the unit communicates with a battery control system, and the first control valve and the second control valve communicate with a battery management system.

A refrigerant is delivered from the unit through multiple pipes to different batteries, and open and closed states of the pipes are controlled through control valves set on the pipes. In this way, cooling processing on each battery is controlled. A cooling need of a low-power device can be effectively satisfied. Moreover, because the multiple pipes output the refrigerant from the same unit, consistency of cooling efficiency can be better ensured, helping to improve consistency of the battery temperatures during cooling, further enhancing battery performance.

A second aspect of embodiments of this application provides a battery temperature control apparatus, where the apparatus includes: a temperature obtaining unit, configured to obtain a first temperature of a first battery and a second temperature of a second battery in an electric device; a temperature difference determining unit, configured to determine a first temperature difference based on the first temperature and the second temperature; and a cooling processing unit, configured to, under a condition that the first temperature difference is greater than a predetermined first temperature difference threshold, perform cooling processing on the first battery, where the first temperature is higher than the second temperature.

A third aspect of embodiments of this application provides a battery temperature control system, including a memory, a processor, and a computer program stored in the memory and executable on the processor, where the processor implements the steps of the method according to any one of the first aspect when executing the computer program.

A fourth aspect of embodiments of this application provides a vehicle, including two or more batteries, where the batteries of the vehicle are cooled by using the battery temperature control method according to any implementation of the first aspect.

A fifth aspect of embodiments of this application provides a computer-readable storage medium, where the computer-readable storage medium stores a computer program, and when the computer program is executed by a processor, the steps of the method according to any implementation of the first aspect are implemented.

It can be understood that for the beneficial effects of the second aspect to the fifth aspect, reference can be made to the related descriptions of the first aspect, and the details repeated herein.

**BRIEF DESCRIPTION OF DRAWINGS**

To more clearly illustrate the technical solutions in the embodiments of this application, the drawings for the embodiments or the description of the prior art are briefly introduced below. It is clear that the drawings in the following description are only some embodiments of this application, and for those of ordinary skill in the art, other drawings can be obtained based on these drawings without creative efforts.

FIG. 1 is a schematic diagram of an implementation scenario of a battery temperature control method according to an embodiment of this application;
FIG. 2 is a schematic diagram of an implementation scenario of another battery temperature control method according to an embodiment of this application;

FIG. 3 is a schematic diagram of an implementation process of a battery temperature control method according to an embodiment of this application;
FIG. 4 is a schematic diagram of battery temperatures according to an embodiment of this application;
FIG. 5 is a schematic diagram of an implementation process for determining a first battery and a second battery according to an embodiment of this application;
FIG. 6 is a schematic diagram of a battery cooling processing procedure according to an embodiment of this application;
FIG. 7 is a schematic diagram of a battery temperature control apparatus according to an embodiment of this application; and
FIG. 8 is a schematic diagram of a battery temperature control system according to an embodiment of this application.

**DESCRIPTION OF EMBODIMENTS**

In the following descriptions, for the purpose of illustration rather than limitation, specific details such as specific system structures and technologies are provided for a thorough understanding of the embodiments of this application. However, those skilled in the art should understand that this application may be practiced in other embodiments without these specific details. In other instances, detailed descriptions of well-known systems, apparatuses, circuits, and methods are omitted so as not to obscure the description of this application with unnecessary details.

To illustrate the technical solutions described in this application, specific embodiments are described below.

When batteries are applied in heavy trucks or other engineering machinery devices, due to the high battery power required by the devices, two or more batteries may be needed to provide energy. Due to differences in the mounting environments of the two or more batteries, such as differences in ventilation conditions, heating environments, and the like, temperatures of different batteries may differ. Due to temperature differences in batteries, internal resistances of the batteries are different, thereby affecting overall performance of the batteries.

Based on this, embodiments of this application provide a battery temperature control method. Temperatures of batteries are obtained to determine a temperature difference of the batteries, and cooling processing is performed on the batteries based on the temperature difference, thereby reducing the temperature difference between the batteries and improving battery performance.

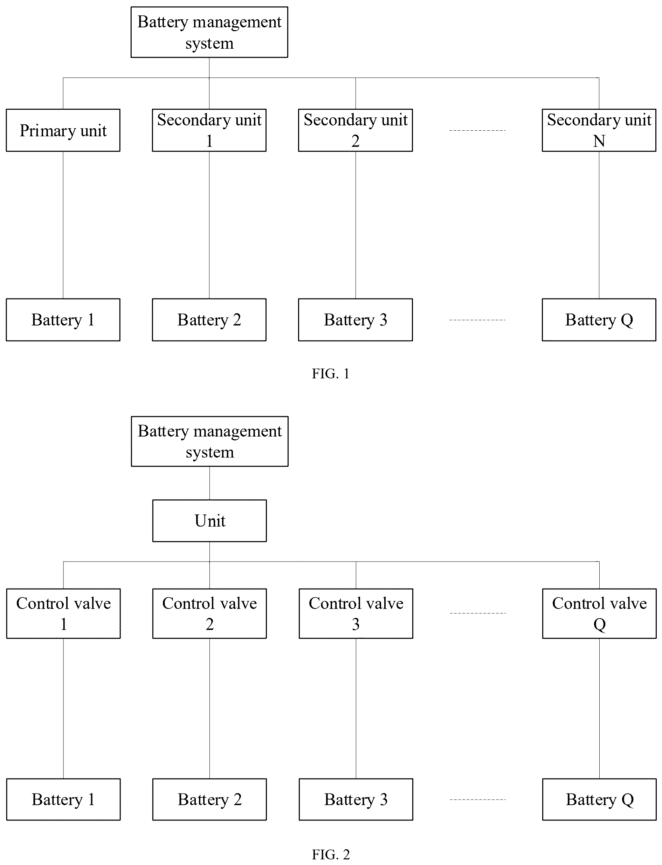

FIG. 1 is a schematic diagram of an application scenario of a battery temperature control method according to an embodiment of this application. As shown in FIG. 1, the application scenario includes a battery management system, multiple units, and an equal number of batteries. The battery management system can communicate separately with each unit. For example, the battery management system can communicate with each unit through a CAN bus. The battery management system can send a control instruction to each unit to individually cool the battery associated with the unit. The unit includes a primary unit and a secondary unit. The primary unit and one or more secondary units communicate with the battery management system. The battery management system may send control instructions to separately control cooling operations of the units, including cooling operations of the primary unit and secondary unit. According to the battery temperature control method in the embodiments of this application, when it is detected that a battery needs cooling, a unit (primary unit or secondary unit) used for cooling the battery can be controlled to individually enter a cooling operation state to implement cooling processing on the battery. When a cooling completion condition is satisfied, the battery management system may control the corresponding unit to stop cooling. In other words, the battery management system can control working states of different units at different times according to cooling instructions determined based on the batteries.

FIG. 2 is a schematic diagram of an application scenario of another battery temperature control method according to an embodiment of this application. As shown in FIG. 2, the application scenario includes a battery management system, a unit, and two or more batteries. Refrigerant output from the unit can be delivered through multiple pipes to the batteries for cooling processing on the batteries. A control valve is set at each pipe, and the battery management system can control the open and closed states of the control valves, thereby achieving cooling control on different batteries.

It can be understood that the control method is not limited to the control method in which one unit cools one battery, or the control method in which one unit cools all batteries through pipes, but may include the control method in which one unit cools batteries in another number through pipes. For example, one unit performs cooling control on two batteries, or one unit performs cooling control on three batteries. When temperature change characteristics of batteries are close (for example, based on collected temperature data, it is determined that temperature difference between two batteries is less than a predetermined temperature value, such as less than two degrees), and one unit performs cooling control on two batteries with close temperature change characteristics, control valves may not be needed on the pipes, and cooling control on the batteries is directly achieved through control of an operating state of the unit. When temperature change characteristics of batteries differ greatly, and multiple pipes of one unit are used for cooling, control valves can be provided on the pipes for separate control.

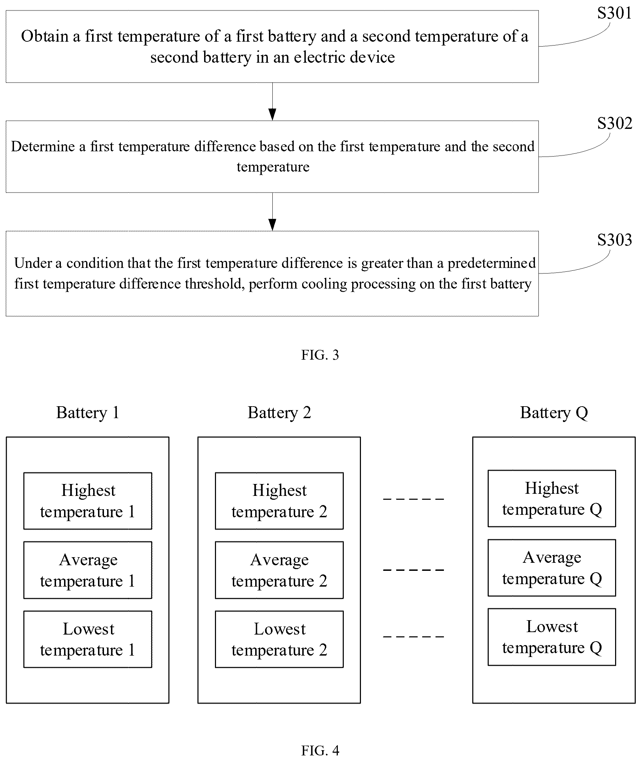

FIG. 3 is a schematic diagram of an implementation process of a battery temperature control method according to an embodiment of this application. Details are as follows.

In S301, a first temperature of a first battery and a second temperature of a second battery in an electric device are obtained.

The first battery and the second battery in the embodiments of this application may be any two batteries in the electric device. For example, all batteries in the electric device can be combined to obtain a combination of any two batteries. Based on temperatures of two batteries in the combination, a battery with a higher temperature is determined as the first battery, and a battery with a lower temperature is determined as the second battery. The electric device may include a heavy truck, an engineering machinery device, and the like.

The battery may accommodate one or more cells, battery packs, or battery boxes. One or multiple temperature sensors may be provided in the battery for detecting temperatures in the battery. When multiple temperature sensors are included in the battery, the temperature sensors may be provided in the battery at predetermined distance intervals, or set in the battery at intervals determined based on a predetermined cell quantity, or a temperature sensor may be provided at each cell. In a possible implementation, temperature differences at various positions of the battery can be statistically analyzed, and temperature sensors are set at places with large temperature differences for detecting the highest temperature, lowest temperature, and the like of the battery.

When multiple temperature sensors are set in the battery, an average of multiple temperatures can be calculated based on temperatures detected by the multiple temperature sensors, as the temperature of the battery. That is, an average temperature of the first battery is the first temperature, and an average temperature of the second battery is the second temperature. The multiple temperatures used to calculate the average temperature may be temperatures of the cells, or temperatures at different measurement points. The different measurement points may be temperatures collected by temperature sensors at different distance intervals or different battery module quantity intervals. Alternatively, the battery temperature may be a temperature of a specified cell in the battery, for example, a temperature of a specified cell at an intermediate position in the battery.

FIG. 4 is a schematic diagram of battery temperatures obtained based on processed temperature data. According to the collected multiple temperatures, the highest temperature and lowest temperature of a battery are determined, and an average temperature is calculated based on the collected multiple temperatures of the battery. For example, FIG. 4 includes Q (Q is a positive integer greater than 2) batteries, and the highest temperature, lowest temperature, and average temperature of each battery are recorded. The average temperature of the battery may be used as the temperature of the battery.

To determine the timeliness of battery cooling and improve battery performance, during determining of the first battery and the second battery, temperatures of multiple batteries included in the electric device can be compared to determine the highest temperature and lowest temperature among the multiple battery temperatures. The highest temperature among the multiple temperatures is determined as the first temperature, and the lowest temperature among the multiple temperatures is determined as the second temperature. A battery corresponding to the highest temperature is the first battery, and a battery corresponding to the lowest temperature is the second battery. The first battery and the second battery determined based on the highest temperature and the lowest temperature can be used to quickly determine the maximum temperature difference of multiple batteries, and perform cooling processing based on the maximum temperature difference, thereby timely and effectively suppressing the increase of temperature difference to ensure overall performance of the batteries.

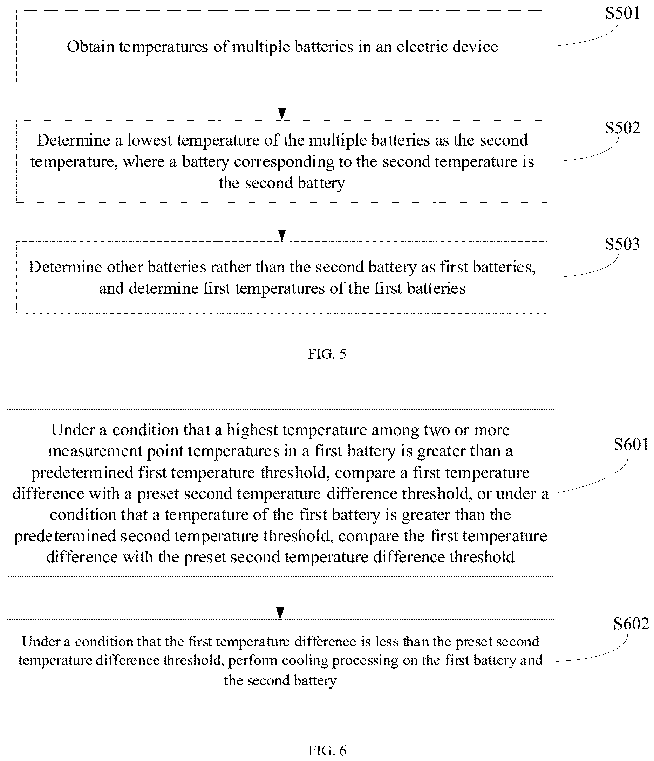

To improve cooling efficiency, a method shown in FIG. 5 may be used to determine the first battery and the second battery, including the following steps.

In S501, temperatures of multiple batteries in an electric device are obtained.

The electric device may include large mechanical engineering device, or may also include large vehicles and the like. Large vehicles include heavy trucks and the like. The electric device in the embodiments of this application may be an electric device with two or more batteries.

The temperature of the battery can be obtained based on one or more temperature sensors in the battery. Due to different mounting positions of the batteries, there are differences in the surrounding environments of the batteries, including ventilation conditions, presence or absence of heating devices, and the like, leading to different battery temperatures.

In S502, a lowest temperature of the multiple batteries is determined as the second temperature, where a battery corresponding to the second temperature is the second battery.

After temperatures of the multiple batteries are obtained, the obtained battery temperatures can be compared to determine the lowest temperature among the multiple batteries, the lowest temperature among the multiple batteries is determined as the second temperature, and a battery corresponding to the lowest temperature is determined as the second battery. For the same battery, a lower temperature means a smaller internal resistance. In this case, the battery with the lowest temperature has a smaller internal resistance relative to other batteries with higher temperatures. With other battery parameters being the same, a greater difference between temperatures of other batteries and the lowest temperature means greater internal resistance, deteriorating overall battery performance.

In S503, other batteries rather than the second battery are determined as first batteries, and first temperatures of the first battery are determined.

Since the second battery is the battery with the lowest temperature, other batteries in the electric device rather than the second battery are used as the first batteries, and first temperatures are determined based on the first battery. In this case, the first temperature is greater than the second temperature.

When the electric device includes multiple batteries, there may be two or more batteries besides the second battery, therefore, two or more first batteries can be determined. If the number of batteries in the electric device is Q, then Q-1 first batteries can be determined.

In S302, a first temperature difference is determined based on the first temperature and the second temperature.

When the first temperature and the second temperature are temperatures of any two batteries in the electric device, multiple first temperature differences can be obtained based on the number of combinations. For example, if the electric device includes Q batteries, the Q batteries can be combined, and the number of combinations is $C_Q^2$, that is $C_Q^2$ combinations of the first temperature and the second temperature are obtained. $C_Q^2$ first temperature differences are determined.

When the first temperature and the second temperature are the highest temperature and the lowest temperature of the batteries respectively, only one group of the first temperature and the second temperature needs to be determined in real time, and a single first temperature difference is determined based on the group of the first temperature and the second temperature.

When the second temperature corresponds to the lowest temperature among the batteries of the electric device, in a device including Q batteries, the first batteries may be Q-1 other batteries besides the second battery in the batteries. The first batteries and the second battery may form Q-1 combinations, corresponding to Q-1 temperature differences.

In S303, under a condition that the first temperature difference is greater than a predetermined first temperature difference threshold, cooling processing is performed on the first battery.

The first temperature is higher than the second temperature. Under a condition that the first temperature difference is greater than the predetermined first temperature difference threshold, it indicates that an internal resistance difference between the current first battery and the second battery is large. To reduce the impact of the temperature difference on battery performance, cooling processing is performed on the first battery with the higher temperature.

In a possible implementation, when the first temperature difference and any one of the temperature or highest temperature of the first battery satisfy the cooling condition, a unit corresponding to the first battery can be triggered to operate to perform cooling processing on the first battery. The first temperature difference satisfying the condition means that the first temperature difference is greater than the predetermined first temperature difference threshold. The temperature of the first battery satisfying the condition includes that the temperature of the first battery is greater than a predetermined second temperature threshold. The highest temperature of the first battery satisfying the condition includes that the highest temperature among two or more temperatures in the first battery is greater than a predetermined first temperature threshold.

Based on comparison between the first temperature (which may be an average temperature of the first battery or a specified cell temperature of the first battery) and a second temperature threshold, when the temperature of the first battery rises and reaches a high temperature range, cooling processing may be performed on the first battery, or when the highest temperature of the first battery rises and reaches a high temperature range, for example, greater than the preset first temperature threshold, cooling processing is performed on the first battery. That is, based on detection of the high temperature range, when temperatures of the batteries in the electric device all rise, including a case that both the first temperature and the second temperature rise and a temperature difference is not large, cooling of high-temperature batteries can be effectively triggered, thereby more effectively improving battery performance.

For cooling processing on the first battery, a third temperature threshold and a fourth temperature threshold may be set. The temperature of the first battery may be compared with the fourth temperature threshold, and the highest temperature of the first battery may be compared with the third temperature threshold. When the temperature of the first battery decreases to less than or equal to the fourth temperature threshold, or the highest temperature among multiple temperatures of the first battery decreases to less than or equal to the third temperature threshold, cooling processing on the first battery is stopped. Therefore, a time required for the temperature of the first battery to return to the trigger condition of being greater than the first temperature threshold is prolonged, and the frequency of cooling processing on the first battery is reduced. In this way, the first battery stays in a lower temperature range for a longer time, improving battery performance.

In a possible implementation, the set first temperature threshold and second temperature threshold may be any value from 29 degrees Celsius to 32 degrees Celsius, and the first temperature threshold and the second temperature threshold may not be limited. For example, the second temperature threshold may be 30 degrees Celsius. The first temperature difference threshold may be any value from 2 degrees Celsius to 4 degrees Celsius, for example, 3 degrees Celsius. The third temperature threshold and the fourth temperature threshold may be any value from 23 degrees Celsius to 26 degrees Celsius, and the third temperature threshold and the fourth temperature threshold may not be limited. For example, the fourth temperature threshold may be 24 degrees Celsius. When it is detected that the temperature of the first battery is 30 degrees Celsius, or the highest temperature of the first battery is 30 degrees Celsius, cooling processing on the first battery may be triggered, or when the first temperature of the first battery is 29 degrees Celsius, and the second temperature of the second battery is 25 degrees Celsius, since the first temperature difference between the second temperature and the first temperature is 4 degrees Celsius, which is greater than the first temperature difference threshold, cooling processing on the first battery may be triggered. Cooling processing is performed on the first battery to reduce the temperature of the first battery to 24 degrees Celsius.

In the embodiments of this application, when the temperature difference between the first temperature and the second temperature is large, and cooling on the first battery is triggered by the first temperature difference, the temperature of the first battery can effectively become close to the temperature of the second battery, thereby improving battery performance. When cooling processing is triggered by the highest temperature of the first battery or triggered because the temperature of the first battery is greater than the first temperature threshold, the temperature of the first battery with higher temperature can be reduced. However, when the temperature of the second battery is close to the temperature of the first battery before the cooling, during the cooling of the first battery, the temperature difference between the first battery and the second battery may first decrease and then increase, and a temperature difference between the cooled first battery and the second battery may be greater than the first temperature difference threshold. In this case, cooling processing is performed on the second battery.

To further improve the cooling efficiency for the battery, cooling processing may be performed based on the temperature difference and the temperatures of the first battery and the second battery. As shown in FIG. 6, the cooling processing process includes the following steps.

In S601, under a condition that a highest temperature among two or more measurement point temperatures in the first battery is greater than a predetermined first temperature threshold, the first temperature difference is compared with a preset second temperature difference threshold, or under a condition that the temperature of the first battery is greater than a predetermined second temperature threshold, the first temperature difference is compared with the preset second temperature difference threshold.

The second temperature difference threshold is less than the first temperature difference threshold.

When it is detected that the temperature of the first battery is high, including a case that the first temperature is greater than the second temperature threshold or the highest temperature of the first battery is greater than the first temperature threshold, cooling processing may be triggered. To implement cooling processing more efficiently, the embodiments of this application also include comparing the first temperature difference with the predetermined second temperature difference threshold. The second temperature difference threshold is less than the first temperature difference threshold.

In S602, under a condition that the first temperature difference is less than the preset second temperature difference threshold, cooling processing is performed on the first battery and the second battery.

Under a condition that the first temperature difference is less than the predetermined second temperature difference threshold, it indicates that the first temperature is close to the second temperature. If cooling processing is performed on the first battery alone, when the temperature of the first battery is reduced to less than or equal to the second temperature threshold, the temperature difference between the first battery and the second battery is large, which may trigger cooling of the second battery. To improve the cooling efficiency of the batteries, synchronous cooling processing on the first battery and the second battery may be triggered.

For example, the first temperature difference threshold is 3 degrees Celsius, and the second temperature difference threshold may be from 1 degree Celsius to 2 degrees Celsius, for example, may be 2 degrees Celsius or the like. For example, the first temperature is 30.5 degrees Celsius, the second temperature is 29 degrees Celsius, the first temperature difference is 1.5 degrees Celsius, less than the second temperature difference threshold, and synchronous cooling on the first battery and the second battery may be triggered, reducing cooling duration for the first battery and the second battery, and improving the cooling efficiency for the batteries.

During cooling processing on the first battery and the second battery, cooling processing may be performed on the first battery and the second battery simultaneously. With the same cooling efficiency, the temperature of the second battery remains lower than the temperature of the first battery. Therefore, the timing to stop cooling can be determined by monitoring the temperature of the second battery. For example, in a case that the temperature of the second battery is detected to be less than or equal to the predetermined second temperature threshold, cooling processing on the first battery and the second battery is stopped, so that the temperature of the second battery is lower, and the temperatures of the first battery and the second battery are close.

In a possible implementation, a first unit for cooling the first battery and a second unit for cooling the second battery may be controlled separately based on the temperature difference between the first battery and the second battery, so that the temperatures of the first battery and the second battery after cooling are the same, and both are less than or equal to the second temperature threshold, or in a temperature range determined based on the second temperature threshold.

For example, operating duration of the first unit may be controlled to be greater than operating duration of the second unit, so that a cooling amplitude of the first unit on the first battery is greater than a cooling amplitude of the second battery, so that temperatures of the first battery and the second battery are consistent after cooling.

In a possible implementation, batteries with close temperatures may be determined based on statistical results. Batteries with close temperatures are connected to a same unit through parallel pipes. When cooling on two batteries in parallel batteries is required, the unit can be put into operation, and control valves at the pipes corresponding to the batteries are opened, to achieve cooling processing on the first battery and the second battery. This reduces unit startups and power consumption of cooling units.

In a possible implementation, in the embodiments of this application, a highest temperature of a battery may be first determined, the battery is determined as a first battery, and the highest temperature is determined as a first temperature. When the first temperature is greater than a predetermined first temperature threshold, one or more battery temperatures, whose temperature difference with the first temperature is less than a predetermined second temperature difference threshold, are determined. Simultaneous cooling processing is performed on the one or more batteries and the first battery, thereby further improving the cooling efficiency of the system and enhancing overall battery performance.

It should be understood that the order of the steps in the above embodiments does not imply the order of execution, and the execution order of the processes should be determined by their functions and internal logic, and should not constitute any limitations on the implementation process of the embodiments of this application.

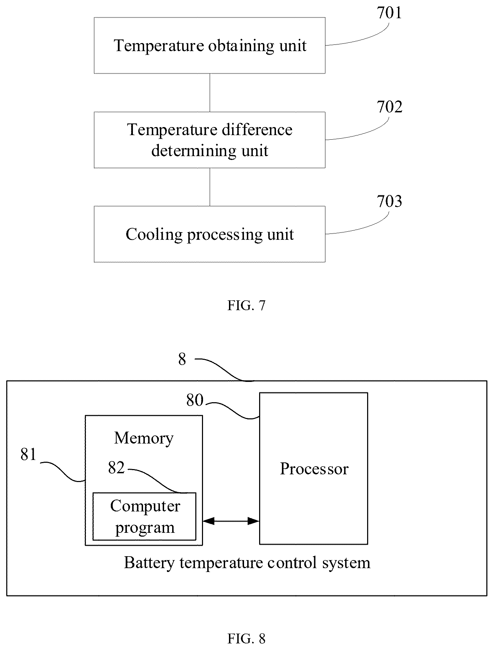

FIG. 7 is a schematic diagram of a battery temperature control apparatus according to an embodiment of this application. As shown in FIG. 7, the apparatus includes:

a temperature obtaining unit 701, configured to obtain a first temperature of a first battery and a second temperature of a second battery in an electric device; a temperature difference determining unit 702, configured to determine a first temperature difference based on the first temperature and the second temperature; and

a cooling processing unit 703, configured to, under a condition that the first temperature difference is greater than a predetermined first temperature difference threshold, perform cooling processing on the first battery, where the first temperature is higher than the second temperature.

The battery temperature control apparatus shown in FIG. 7 corresponds to the battery temperature control method shown in FIG. 3.

FIG. 8 is a schematic diagram of a battery temperature control system according to an embodiment of this application. As shown in FIG. 8, the battery temperature control system 8 of this embodiment includes: a processor 80, a memory 81, and a computer program 82 stored in the memory 81 and executable on the processor 80, such as a battery temperature control program. When the processor 80 executes the computer program 82, the steps in the above embodiments of the battery temperature control method are implemented. Alternatively, when the processor 80 executes the computer program 82, the functions of the modules/units in the above apparatus embodiments are implemented.

For example, the computer program 82 may be divided into one or more modules/units, and the one or more modules/units are stored in the memory 81 and executed by the processor 80 to complete this application. The one or more modules/units may be a series of computer program instruction segments capable of completing specific functions, and the instruction segments are used to describe the execution process of the computer program 82 in the battery temperature control system 8.

The battery temperature control system may include, but is not limited to, the processor 80 and the memory 81. Those skilled in the art can understand that FIG. 8 is only an example of the battery temperature control system 8, and does not constitute a limitation on the battery temperature control system 8; and more or fewer components may be included, or some components may be combined, or different components may be used, for example, the battery temperature control system may further include input and output devices, network access devices, buses, and the like.

The processor 80 may be a central processing unit (Central Processing Unit, CPU), or may be another general-purpose processor, digital signal processor (Digital Signal Processor, DSP), application specific integrated circuit (Application Specific Integrated Circuit, ASIC), field-programmable gate array (Field-Programmable Gate Array, FPGA) or another programmable logic device, discrete gate or transistor logic device, discrete hardware component, or the like. A general-purpose processor may be a microprocessor or the processor may be any conventional processor or the like.

The memory 81 may be an internal storage unit of the battery temperature control system 8, such as a hard disk or memory of the battery temperature control system 8. The memory 81 may alternatively be an external storage device of the battery temperature control system 8, such as a plug-in hard disk, smart media card (Smart Media Card, SMC), secure digital (Secure Digital, SD) card, flash card (Flash Card), and the like equipped on the battery temperature control system 8. Further, the memory 81 may further include both an internal storage unit and an external storage device of the battery temperature control system 8. The memory 81 is used to store the computer program and other programs and data required by the battery temperature control system. The memory 81 may further be used to temporarily store data that is output or will be output.

In addition, an embodiment of this application further provides an electric device. The electric device includes two or more batteries, and the batteries of the electric device are cooled by using the above battery temperature control method. The device may include a heavy truck, a large mechanical device, and the like.

Those skilled in the art can clearly understand that, for convenience and brevity of description, only the above division of the functional units and modules is illustrated as an example. In practical applications, the above functions can be allocated to different functional units and modules as needed, that is, the internal structure of the apparatus is divided into different functional units or modules to complete all or part of the functions described above. The functional units and modules in the embodiments may be integrated into one processing unit, or each unit may exist physically alone, or two or more units may be integrated into one unit. The above integrated unit may be implemented in the form of hardware or in the form of software functional units. In addition, the specific names of the functional units and modules are only for the convenience of distinguishing between them and are not used to limit the protection scope of this application. For the specific working processes of the units and modules in the above system, reference may be made to the corresponding processes in the foregoing method embodiments. Details are not repeated herein.

In the above embodiments, the descriptions of the embodiments emphasize different aspects, and for parts that are not detailed or recorded in a specific embodiment, reference may be made to the related descriptions of other embodiments.

Those of ordinary skill in the art may realize that the units and algorithm steps of the examples described with reference to the embodiments disclosed herein can be implemented in electronic hardware, or a combination of computer software and electronic hardware. Whether these functions are performed in hardware or software depends on the specific application and design constraints of the technical solution. Those skilled in the art may use different methods to implement the described functions for each specific application, but such implementation should not be considered beyond the scope of this application.

In the embodiments provided by this application, it should be understood that the disclosed apparatus/terminal device and method may be implemented in other ways. For example, the apparatus/terminal device embodiments described above are merely illustrative. For example, the division of the modules or units is only a logical function division, and there may be other division methods in actual implementations, for example, multiple units or components may be combined or integrated into another system, or some features may be ignored or not executed. In addition, the shown or discussed mutual coupling or direct coupling or communication connection may be indirect coupling or communication connection through some interfaces, apparatuses or units, and may be electrical or mechanical, or in other forms.

The units described as separate components may or may not be physically separated, and the components displayed as units may or may not be physical units, that is, they may be located in one place, or may be distributed to multiple network units. Some or all of the units may be selected according to actual needs to achieve the purpose of the solutions of the embodiments.

In addition, the functional units in the embodiments of this application may be integrated into one processing unit, or each unit may exist physically alone, or two or more units may be integrated into one unit. The above integrated units may be implemented in the form of hardware or in the form of software functional units.

When the integrated module/unit is implemented in the form of a software functional unit and sold or used as an independent product, it may be stored in a computer-readable storage medium. Based on this understanding, this application implements all or part of the processes in the above embodiment methods, and the methods can be completed by instructing relevant hardware through a computer program. The computer program can be stored in a computer-readable storage medium, and when the computer program is executed by a processor, the steps of the above method embodiments can be implemented. The computer program includes computer program code, and the computer program code may be in the form of source code, object code, executable file, an intermediate form, or the like. The computer-readable medium may include any entity or apparatus capable of carrying the computer program code, recording medium, USB flash drive, removable hard disk, magnetic disk, optical disk, computer memory, read-only memory (ROM, Read-Only Memory), random access memory (RAM, Random Access Memory), electrical carrier signal, telecommunications signal, software distribution medium, and the like. It should be noted that the content contained in the computer-readable medium can be appropriately increased or decreased according to the requirements of legislation and patent practice in the jurisdiction. For example, in some jurisdictions, according to legislation and patent practice, computer-readable media do not include an electrical carrier signal and a telecommunications signal.

The above embodiments are only used to illustrate the technical solutions of this application, rather than to limit them; although this application is described in detail with reference to the foregoing embodiments, those of ordinary skill in the art should understand that they can still modify the technical solutions recorded in the foregoing embodiments, or make equivalent replacements to some of the technical features; and these modifications or replacements do not make the essence of the corresponding technical solutions depart from the spirit and scope of the technical solutions of the embodiments of this application, and should be included within the protection scope of this application.

**Claims**

1. A battery temperature control method, **characterized in that** the method comprises:

   obtaining a first temperature of a first battery and a second temperature of a second battery in an electric device;
   determining a first temperature difference based on the first temperature and the second temperature; and
   under a condition that the first temperature difference is greater than a predetermined first temperature difference threshold, performing cooling processing on the first battery, wherein the first temperature is higher than the second temperature.

2. The method according to claim 1, **characterized in that** the first temperature is an average of temperatures at two or more measurement points in the first battery, and the second temperature is an average of temperatures at two or more measurement points in the second battery.

3. The method according to claim 1, **characterized in that** the first temperature is an average of temperatures of two or more cells in the first battery, or a temperature of a specified cell in the first battery; and the second temperature is an average of temperatures of two or more cells in the second battery, or a temperature of a specified cell in the second battery.

4. The method according to any one of claims 1 to 3, **characterized in that** the obtaining a first temperature of a first battery and a second temperature of a second battery in an electric device comprises:

   obtaining temperatures of multiple batteries in the electric device; and
   determining a highest temperature and a lowest temperature of the multiple batteries, wherein the highest temperature is the first temperature of the first battery, and the lowest temperature is the second temperature of the second battery.

5. The method according to any one of claims 1 to 3, **characterized in that** the obtaining a first temperature of a first battery and a second temperature of a second battery in an electric device comprises:

obtaining temperatures of multiple batteries in the electric device;

determining a lowest temperature of the multiple batteries as the second temperature, wherein a battery corresponding to the second temperature is the second battery; and

determining other batteries rather than the second battery as first batteries, and determining first temperatures of the first batteries.

6. The method according to any one of claims 1 to 5, **characterized in that** the method further comprises: under a condition that a highest temperature of the multiple cells in the first battery is greater than a predetermined first temperature threshold, performing the cooling processing on the first battery.

7. The method according to claim 6, **characterized in that** the method further comprises: under a condition that the highest temperature of the multiple cells in the first battery is less than or equal to a predetermined third temperature threshold, stopping the cooling processing on the first battery, wherein the third temperature threshold is less than the first temperature threshold.

8. The method according to any one of claims 1 to 7, **characterized in that** the method further comprises: under a condition that the first temperature of the first battery is greater than a predetermined second temperature threshold, performing the cooling processing on the first battery.

9. The method according to claim 8, **characterized in that** the method further comprises: under a condition that the first temperature of the first battery is less than or equal to a predetermined fourth temperature threshold, stopping the cooling processing on the first battery, wherein the fourth temperature threshold is less than the second temperature threshold.

10. The method according to any one of claims 1 to 9, **characterized in that** the first battery is cooled by a first unit, the second battery is cooled by a second unit, and the first unit and the second unit communicate with a battery management system.

11. The method according to any one of claims 1 to 9, **characterized in that** the batteries are cooled by a unit, the unit is connected to multiple cooling channels through control valves, the cooling channels comprise a first cooling channel and a second cooling channel, and the control valves comprise a first control valve and a second control valve; and the first battery is cooled through the first cooling channel, the second battery is cooled through the second cooling channel, the unit communicates with a battery control system, and the first control valve and the second control valve communicate with a battery management system.

12. A battery temperature control apparatus, **characterized in that** the apparatus comprises:

a temperature obtaining unit, configured to obtain a first temperature of a first battery and a second temperature of a second battery in an electric device;

a temperature difference determining unit, configured to determine a first temperature difference based on the first temperature and the second temperature; and

a cooling processing unit, configured to, under a condition that the first temperature difference is greater than a predetermined first temperature difference threshold, perform cooling processing on the first battery, wherein the first temperature is higher than the second temperature.

13. A battery temperature control system, comprising a memory, a processor, and a computer program stored in the memory and executable on the processor, **characterized in that** the processor implements the steps of the method according to any one of claims 1 to 11 when executing the computer program.

14. An electric device, comprising two or more batteries, **characterized in that** cooling processing is performed on the batteries of the electric device by using the battery temperature control method according to any one of claims 1 to 11.

15. A computer-readable storage medium, wherein the computer-readable storage medium stores a computer program, **characterized in that** when the computer program is executed by a processor, the steps of the method according to any one of claims 1 to 11 are implemented.

```
                    ┌──────────────────────┐
                    │  Battery management  │
                    │       system         │
                    └──────────────────────┘
```

| Primary unit | Secondary unit 1 | Secondary unit 2 | ------------ | Secondary unit N |
|---|---|---|---|---|

| Battery 1 | Battery 2 | Battery 3 | ------------ | Battery Q |
|---|---|---|---|---|

FIG. 1

```
                    ┌──────────────────────┐
                    │  Battery management  │
                    │       system         │
                    └──────────────────────┘
                              │
                    ┌──────────────────────┐
                    │         Unit         │
                    └──────────────────────┘
```

| Control valve 1 | Control valve 2 | Control valve 3 | ------------ | Control valve Q |
|---|---|---|---|---|

| Battery 1 | Battery 2 | Battery 3 | ------------ | Battery Q |
|---|---|---|---|---|

FIG. 2

FIG. 3

FIG. 4

Obtain temperatures of multiple batteries in an electric device — S501

Determine a lowest temperature of the multiple batteries as the second temperature, where a battery corresponding to the second temperature is the second battery — S502

Determine other batteries rather than the second battery as first batteries, and determine first temperatures of the first batteries — S503

FIG. 5

Under a condition that a highest temperature among two or more measurement point temperatures in a first battery is greater than a predetermined first temperature threshold, compare a first temperature difference with a preset second temperature difference threshold, or under a condition that a temperature of the first battery is greater than the predetermined second temperature threshold, compare the first temperature difference with the preset second temperature difference threshold — S601

Under a condition that the first temperature difference is less than the preset second temperature difference threshold, perform cooling processing on the first battery and the second battery — S602

FIG. 6

Temperature obtaining unit — 701

Temperature difference determining unit — 702

Cooling processing unit — 703

FIG. 7

8

80

Memory

81

82

Computer program

Processor

Battery temperature control system

FIG. 8

## INTERNATIONAL SEARCH REPORT

| International application No. |
|---|
| **PCT/CN2024/077562** |

### A. CLASSIFICATION OF SUBJECT MATTER

H01M10/63(2014.01)i; H01M10/613(2014.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电池, 温度, 温控, 降温, 冷却, 温差, battery, cell, temperature, control, cool, difference

### C. DOCUMENTS CONSIDERED TO BE RELEVANT

| Category* | Citation of document, with indication, where appropriate, of the relevant passages | Relevant to claim No. |
|---|---|---|
| PX | CN 116780042 A (CONTEMPORARY AMPEREX TECHNOLOGY CO., LTD.) 19 September 2023 (2023-09-19)<br>entire document | 1-15 |
| X | CN 112133979 A (GREAT WALL MOTOR CO., LTD.) 25 December 2020 (2020-12-25)<br>description, paragraphs 45-78, and figures 1-5 | 1-4, 6-15 |
| Y | CN 112133979 A (GREAT WALL MOTOR CO., LTD.) 25 December 2020 (2020-12-25)<br>description, paragraphs 45-78, and figures 1-5 | 5 |
| Y | CN 113602150 A (BEIQI FOTON MOTOR CO., LTD.) 05 November 2021 (2021-11-05)<br>description, paragraphs 32-39 | 5 |
| X | CN 115172936 A (SHENZHEN CLOU ELECTRONICS CO., LTD.) 11 October 2022 (2022-10-11)<br>description, paragraphs 54-139, and figures 1-5 | 1, 3, 13, 15 |
| A | US 2023020354 A1 (SHENZHEN ENVICOOL TECHNOLOGY CO., LTD.) 19 January 2023 (2023-01-19)<br>entire document | 1-15 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 April 2024** | **15 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/077562**

| Patent document cited in search report | | | Publication date (day/month/year) | Patent family member(s) | | | Publication date (day/month/year) |
|---|---|---|---|---|---|---|---|
| CN | 116780042 | A | 19 September 2023 | None | | | |
| CN | 112133979 | A | 25 December 2020 | None | | | |
| CN | 113602150 | A | 05 November 2021 | CN | 113602150 | B | 24 March 2023 |
| CN | 115172936 | A | 11 October 2022 | None | | | |
| US | 2023020354 | A1 | 19 January 2023 | CN | 113488719 | A | 08 October 2021 |
| | | | | CN | 113488719 | B | 06 June 2023 |

Form PCT/ISA/210 (patent family annex) (July 2022)

**REFERENCES CITED IN THE DESCRIPTION**

**Patent documents cited in the description**

- CN 202310798566